# EUROPEAN PATENT SPECIFICATION

(11) **EP 3 118 921 B1**
(45) Date of publication and mention of the grant of the patent: **27.03.2019**
(21) Application number: 15762400.8
(22) Date of filing: 23.02.2015
(51) Int. Cl.: H01M 8/02, H01M 4/86, H01M 8/12

(54) **POROUS CURRENT COLLECTOR, FUEL CELL AND METHOD FOR PRODUCING POROUS CURRENT COLLECTOR**
PORÖSER STROMKOLLEKTOR, BRENNSTOFFZELLE UND VERFAHREN ZUR HERSTELLUNG EINES PORÖSEN STROMKOLLEKTORS
COLLECTEUR DE COURANT POREUX, PILE À COMBUSTIBLE ET PROCÉDÉ DE FABRICATION DE COLLECTEUR DE COURANT POREUX

(30) Priority: 12.03.2014 JP 2014048637
(43) Date of publication of application: 18.01.2017
(73) Proprietor: Sumitomo Electric Industries, Ltd., Osaka-shi, Osaka 541-0041 (JP)
(72) Inventor: NODA, Yohei, Itami-shi Hyogo 664-0016 (JP); MAJIMA, Masatoshi, Itami-shi Hyogo 664-0016 (JP); OKUNO, Kazuki, Itami-shi Hyogo 664-0016 (JP); MIZUHARA, Naho, Itami-shi Hyogo 664-0016 (JP); HIRAIWA, Chihiro, Itami-shi Hyogo 664-0016 (JP); HIGASHINO, Takahiro, Itami-shi Hyogo 664-0016 (JP); TAWARAYAMA, Hiromasa, Itami-shi Hyogo 664-0016 (JP); KATO, Masahiro, Itami-shi Hyogo 664-0016 (JP)
(74) Representative: Boult Wade Tennant LLP
(86) International application number: PCT/JP2015/054992
(87) International publication number: WO 2015/137102

(56) References cited:
- JP-A- 2009 099 562
- JP-A- 2012 096 167
- JP-A- 2012 132 083
- JP-A- 2013 093 271
- US-A1- 2005 061 151
- US-A1- 2005 155 490
- US-A1- 2013 108 947

## Description

### Technical Field

The present invention relates to a porous current collector, a fuel cell, and a method for producing the porous current collector. More particularly, the present invention relates to a porous current collector having good conductivity and corrosion resistance.

### Background Art

For example, solid oxide fuel cells (hereinafter referred to as SOFCs) among fuel cells include a solid electrolyte layer formed from a solid oxide and electrode layers stacked on both sides of the solid electrolyte layer.

SOFCs need to operate at temperatures higher than those at which polymer electrolyte fuel cells (PEFCs) and phosphoric acid fuel cells (PAFCs) operate. However, SOFCs have attracted attention in recent years because SOFCs can operate at high efficiency and can use biofuels or the like.

Each electrode is provided with, on its surface, a porous current collector in order to collect and extract electrons generated in the electrode. A current collector, which is to be stacked on each electrode, is preferably formed from a porous conductive material having high conductivity and also having large porosity so as to maintain the fluidity of air or fuel gas. US2013/0108947A1 relates to a porous current collector, a method of producing the same and a fuel cell including the porous current collector.

### Citation List

### Patent Literature

PTL 1: Japanese Unexamined Patent Application Publication No. 2002-280026
PTL 2: Japanese Unexamined Patent Application Publication No. 2013-078716

### Summary of Invention

### Technical Problem

Such a SOFC typically operates at high temperatures from 600°C to 1000°C.
Since oxygen ions O²⁻ are generated in an air electrode, a current collector on the air electrode side is exposed to a very strong oxidizing environment (corrosive environment). Because of this, the porous current collector needs to have high heat resistance and high oxidation resistance. In order to satisfy these requirements, for example, a noble metal, such as Pt and Ag, a metal, such as Inconel, or carbon is often used. However, when these noble metals and materials, such as Inconel, are used, a problem associated with high production costs arises because of resource issues. When a porous body is formed from a carbon material, problems associated with low gas fluidity and low conductivity arise.

A nickel porous base material, which is inexpensive and has high conductivity, may be used as a material of the current collector. However, it is difficult to use a simple nickel substance in the corrosive environment of a fuel cell.

In order to overcome the disadvantages described above, the surface of the nickel porous base material is coated with a corrosion-resistant material so that the nickel porous base material has desired corrosion resistance. In particular, if the nickel porous base material can be coated with silver, which is relatively inexpensive, both reduced production costs and improved conductivity of the current collector can be expected.

However, nickel and silver normally do not form a solid solution. Even if a silver layer is formed on the surface of a nickel porous base material, the peel strength or the like is low, which makes it difficult to be used as an electrode of a fuel cell.

The present invention has been made to solve the aforementioned problems. An object of the present invention is to provide an inexpensive porous current collector having high durability by forming a silver layer having high strength on a current collector formed from a nickel porous base material.

### Solution to Problem

In the present invention, a porous current collector is provided as defined in the appended claims.

### Advantageous Effects of Invention

A current collector having high conductive performance and high corrosion resistance can be provided at a low cost.

### Brief Description of Drawings

Figure 1 is a cross-sectional view of an example schematic structure of a fuel cell including current collectors according to the present invention.
Figure 2 is a microscopy image illustrating an example porous base material that forms a porous current collector.
Figure 3 is a schematic diagram illustrating the structure of a current collector formed by using the porous base material illustrated in Figure 2.
Figure 4 is a cross-sectional view taken along line IV-IV in Figure 3.
Figure 5 is a diagram illustrating a process for producing the current collector in Figure 3.
Figure 6 is a graph showing comparison of power generation performance between a fuel cell including a current collector with a silver layer and a fuel cell including a current collector with no silver layer.
Figure 7 is a phase diagram of tin (Sn)-silver (Ag).
Figure 8 is a phase diagram of nickel (Ni)-silver (Ag).
Figure 9 illustrates XRD analysis results of a Ni-3wt%Sn porous current collector.
Figure 10 illustrates XRD analysis results of a Ni-5wt%Sn porous current collector.
Figure 11 illustrates XRD analysis results of a Ni-8wt%Sn porous current collector.
Figure 12 illustrates XRD analysis results of a Ni-16wt%Sn porous current collector.

### Description of Embodiments

### [Overview of Embodiments of Present Invention]

In this embodiment, a porous current collector is provided in at least one of a first current collector and a second current collector in a fuel cell including a solid electrolyte layer, a first electrode layer on one side of the solid electrolyte layer, a second electrode layer on the other side, the first current collector on one side of the first electrode layer, and the second current collector on the other side of the second electrode layer. The porous current collector includes a nickel porous base material, which is a porous base material having continuous pores and in which an alloy layer containing nickel and tin (Sn) is formed at least on a surface of the porous base material, and a silver layer formed on a surface of the nickel porous base material. The nickel porous base material according to this embodiment may be formed only of nickel or may be formed of a material mainly composed of nickel.

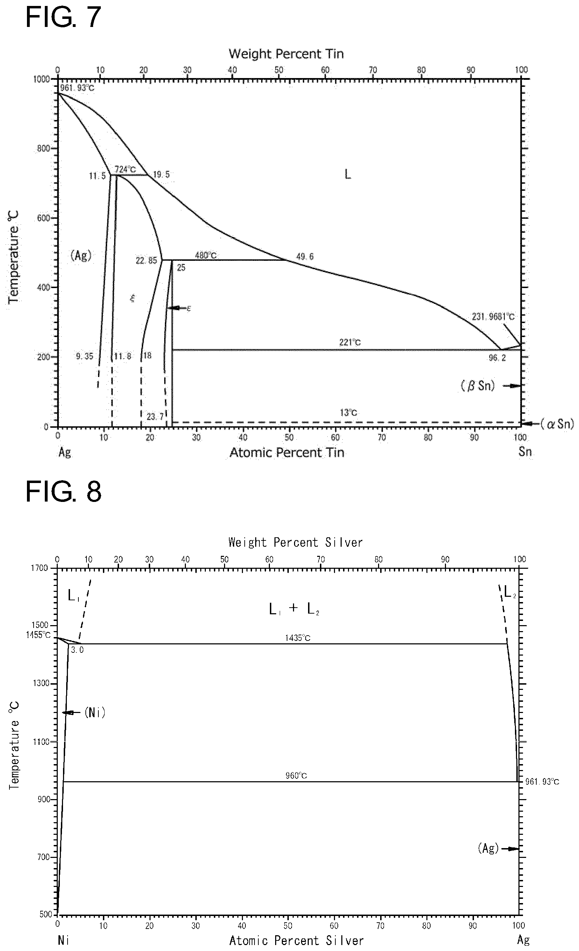

Nickel and silver normally do not form a solid solution as shown in the phase diagram illustrated in Figure 8. In contrast, tin and silver are highly compatible with each other and can form a solid solution as shown in the phase diagram illustrated in Figure 7. Nickel and tin are also highly compatible with each other, and nickel, tin, and silver are thus dissolved in one another to form an alloy layer. In this embodiment, a silver layer is formed on the surfaces of pores in a nickel porous base material by using the compatibility of these metals.

The above configuration allows a silver layer having sufficient strength to be formed on the surface of a nickel porous base material to which ordinary plating or the like fails to impart bonding strength sufficient for fuel cell applications. The formation of the silver layer significantly improves the corrosion resistance of the nickel porous base material. Since silver has high electrical conductivity, the current collector also has high conductivity. Therefore, a fuel cell including the current collector also has high performance.

The tin-containing alloy layer can be formed at least on the surface of the nickel porous base material. That is, the nickel porous base material may be entirely formed of a tin alloy, or the tin-containing alloy layer may be formed only on the surface of the nickel porous base material.

The entire nickel porous base material and the tin-containing alloy layer may contain an alloy component other than tin. For example, an alloy layer containing chromium (Cr), W (tungsten), cobalt (Co), copper (Cu), iron (Fe), manganese (Mn), and/or the like can also be formed in order to improve corrosion resistance.

In this embodiment, a solid solution layer of these metals is formed at and near the interface between the tin-containing alloy layer and the silver layer at least at the operating temperature of the fuel cell. Thus, the silver layer having sufficient strength can be formed on the tin-containing alloy layer at the operating temperature of the fuel cell.

The percentage of tin in the tin-containing alloy layer is preferably set to 5 to 20 mass%, more preferably set to 5 to 16 mass%, and more preferably set to 5 to 10 mass%. When the percentage of tin is less than 5 mass%, sufficient bonding strength cannot be ensured between the tin-containing alloy layer and the silver layer. When the percentage of tin is more than 20 mass%, the tin-containing alloy layer has low toughness, which causes handling difficulty.

As the percentage of tin in the tin-containing alloy layer increases, raw-material costs increase. As the percentage of tin in the tin-containing alloy layer increases, it is easier to generate Ni₃Sn₂, a hard, brittle solid solution, in the alloy layer, which makes the nickel porous base material as well as the porous current collector brittle (causes formation difficulty).

Furthermore, regarding the percentage of tin in the tin-containing alloy layer, various solid solutions other than the above Ni₃Sn₂ may be generated in the alloy layer during the heating process for producing the alloy layer, and it may be difficult to make completely uniform the percentage of tin in any part of the tin-containing alloy layer. Therefore, when the percentage of tin in the tin-containing alloy layer before the heat treatment is small, the percentage of tin in the tin-containing alloy layer before the heat treatment may be less than 5 mass% depending on the part, which may partially fail to ensure sufficient bonding strength between the tin-containing alloy layer and the silver layer.

As described above, in consideration of, for example, variations in the percentage of tin depending on the part, the percentage (mean value) of tin in the tin-containing alloy layer is preferably set to 8 to 16 mass%, and more preferably set to 8 to 10 mass%.

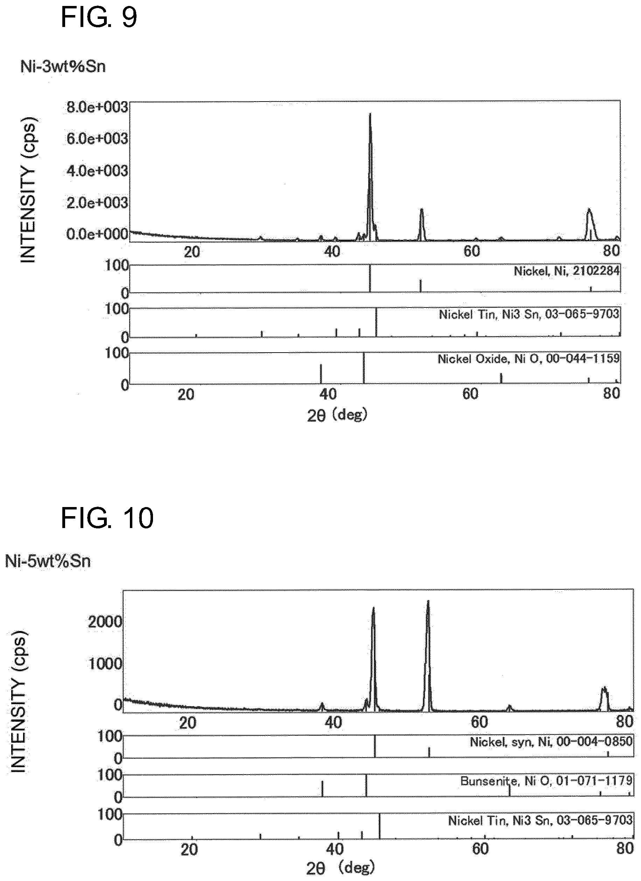

Figures 9, 10, 11, and 12 respectively illustrate XRD (X-ray diffraction) analysis results of a Ni-3wt%Sn porous current collector, a Ni-5wt%Sn porous current collector, a Ni-8wt%Sn porous current collector, and a Ni-16wt%Sn porous current collector. In Figures 9 to 12, the horizontal axis represents the angle of incidence 2θ (deg) of X-rays, and the vertical axis represents the diffraction intensity (cps).

The Ni-Sn porous current collectors used in the XRD analysis in Figures 9 to 12 are produced by a method for producing porous current collectors 8a and 9a described below.

According to Figure 9, Figure 10, and Figure 11, X-ray diffraction peaks attributed to nickel (Ni), Ni₃Sn, and NiO are found, and no X-ray diffraction peak attributed to Ni₃Sn₂ is found for the Ni-3wt%Sn porous current collector, the Ni-5wt%Sn porous current collector, and the Ni-8wt%Sn porous current collector.

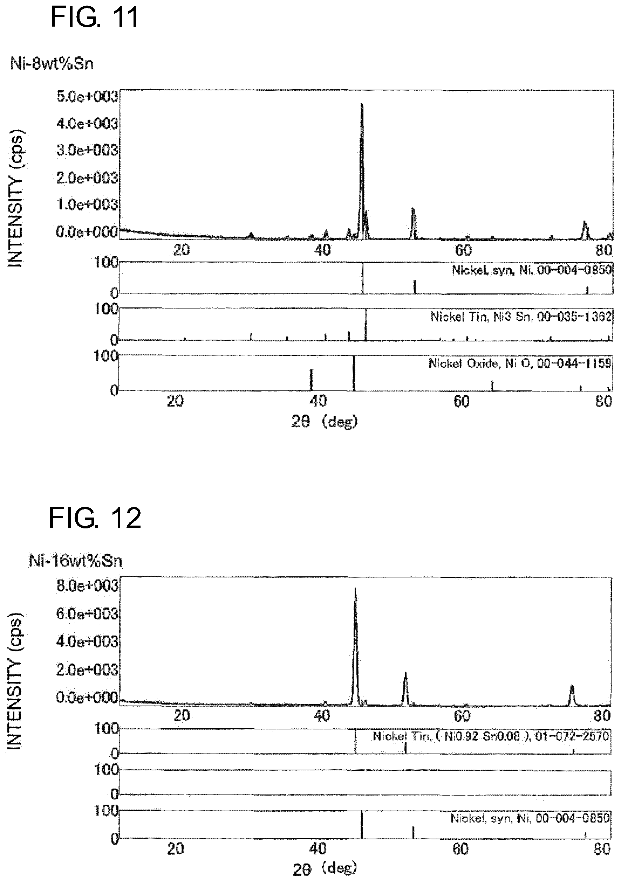

According to Figure 12, X-ray diffraction peaks attributed to nickel (Ni) and NiSn are found, but no X-ray diffraction peak attributed to Ni₃Sn₂ is found for the Ni-16wt%Sn porous current collector.

As described above, it is found that, when the percentage of tin in the Ni-Sn porous current collector is 16wt% or less, no Ni₃Sn₂ is present in the tin-containing alloy layer in the Ni-Sn porous current collector (if Ni₃Sn₂ is present, it is too small to be detected by the XRD analysis).

The silver layer is preferably formed to have a thickness of 1 µm to 50 µm. When the silver layer has a thickness of less than 1 µm, pinholes tend to be formed, and sufficient corrosion resistance cannot be ensured. When the silver layer has a thickness of more than 50 µm, it is difficult to form the silver layer on the surface of the nickel porous base material. Furthermore, there is a risk of inhibiting gas fluidity because of low porosity. The use of a silver layer having a thickness of more than 50 µm increases production costs.

Since silver is an expensive material, it is desirable to reduce the amount of silver used to the lowest possible amount in order to reduce production costs. Since the bonding strength between the tin-containing alloy layer and the silver layer is high in this embodiment, the amount of silver used during production can be reduced by setting the thickness of the silver layer to 50 µm or less. Even if the thickness of the silver layer is set to 1 µm or more and 30 µm or less, or 1 µm or more and less than 10 µm in this embodiment, sufficient bonding strength between the tin-containing alloy layer and the silver layer can be ensured.

In order to function as a current collector, the porosity of the porous current collector is preferably set to 30% to 98%. When the porosity is less than 30%, the gas flow resistance is too large to supply a sufficient amount of gas into the electrode layer. When the porosity of the porous current collector is more than 98%, the strength of the current collector itself cannot be ensured.

The average pore size of the continuous pores is preferably set to 0.2 to 5 mm. When the average pore size is less than 0.2 mm, gas diffusion is inhibited. When the average pore size is more than 5 mm, a gas easily passes through the continuous pores and the diffusion effect decreases, which makes it difficult for the gas to reach the surface of the electrode.

The nickel porous base material is not limited to any particular form. For example, a nickel porous base material having a three-dimensional network structure can be used as the nickel porous base material. The porous base material having a three-dimensional network structure can be formed to have large porosity and include pores having a uniform pore size. Because of these properties, the gas flow resistance decreases and the efficiency of the fuel cell increases.

The nickel porous base material having a three-dimensional network structure may include, for example, a skeleton including an outer shell and a core containing one or both of a hollow material and a conductive material. The skeleton may have an integrally continuous structure.

In another embodiment, a fuel cell includes the porous current collector. Such a fuel cell includes the current collector and thus has high conductive performance and high corrosion resistance.

A porous current collector according to this embodiment can be produce by a method including a nickel-porous-base-material forming step of forming a porous base material containing nickel, a tin-coating step of coating the nickel porous base material with tin, a silver-layer forming step of forming a silver layer on the nickel porous base material coated with tin in the tin-coating step, and a silver-layer dissolving step of dissolving at least part of the silver layer in the nickel porous base material.

By the aforementioned steps, a silver layer having high bonding strength can be formed on the surface of the nickel porous base material.

### [Detailed Description of Embodiments]

Embodiments of the present invention will be described below with reference to the drawings.

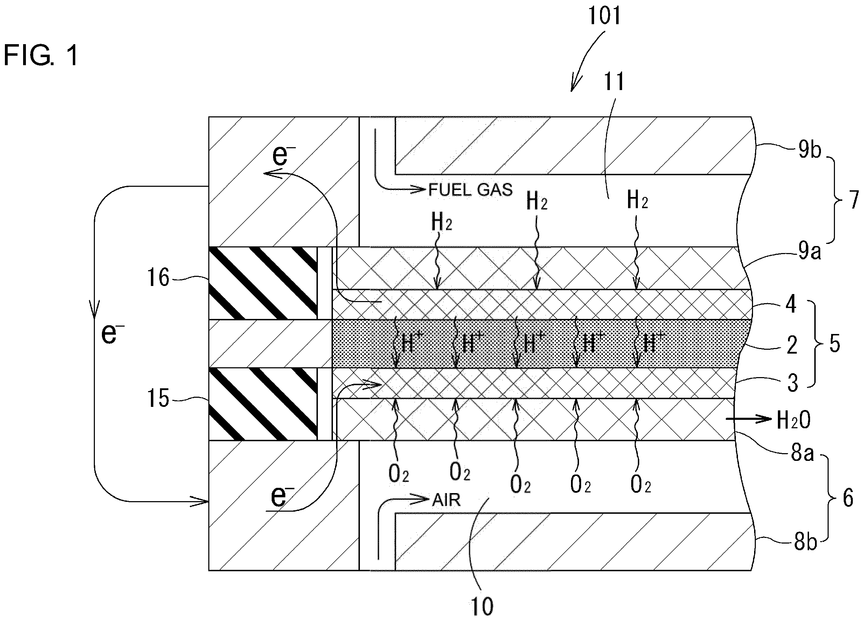

Figure 1 illustrates an example cell structure of a fuel cell including the porous current collectors according to this embodiment. Although Figure 1 illustrates a single cell structure, a fuel cell includes multiple cells each stacked with a conductive separator therebetween in the thickness direction in order to increase the voltage of power generation.

A fuel cell 101 includes a membrane electrode assembly 5 formed by stacking a first electrode layer 3, which is an air electrode, and a second electrode layer 4, which is a fuel electrode, such that the first electrode layer 3 and the second electrode layer 4 sandwich a solid electrolyte layer 2. As the solid electrolyte layer 2, for example, a solid electrolyte formed of yttrium-doped barium zirconate (BZY), yttrium-doped barium cerate (BCY), or the like can be used in a solid oxide fuel cell. In a polymer electrolyte fuel cell, for example, a polymer membrane formed of Nafion or the like can be used.

The first electrode layer 3 and the second electrode layer 4 are formed of a catalyst, a conductive material, and the like, and stacked and integrally formed on the solid electrolyte layers. In this embodiment, the first electrode layer 3 and the second electrode layer 4 are formed in a predetermined rectangular area except the margin of the solid electrolyte layer.

A first current collector 6 including a first porous current collector 8a according to this embodiment and a first plate-shaped current collector 8b is provided on one side of the membrane electrode assembly 5. A second current collector 7 including a second porous current collector 9a and a second plate-shaped current collector 9b is provided on the other side. In this embodiment, the plate-shaped current collectors 8b and 9b are formed of a plate-shaped conductive material, such as stainless steel or carbon. A groove or the like is formed on each of the inner surfaces of the plate-shaped current collectors 8b and 9b to provide a first gas passage 10 and a second gas passage 11 through which gases flow.

The porous current collectors 8a and 9a are formed of a conductive porous base material, and allow gases flowing through the gas passages 10 and 11 to be diffused into and act on the electrode layers 3 and 4. The electrode layers 3 and 4 are electrically coupled to the plate-shaped current collectors 8b and 9b to establish electrical continuity therebetween.

In the fuel cell 101, the porous current collectors 8a and 9a and the plate-shaped current collectors 8b and 9b are stacked on both sides of the membrane electrode assembly 5, and the peripheries with no electrode layer are sealed with gaskets 15 and 16.

Air containing oxygen as an oxidant is introduced into the first gas passage 10, and oxygen is supplied to the first electrode layer 3 through the first porous current collector 8a. A fuel gas containing hydrogen as a fuel is introduced into the second gas passage 11, and hydrogen is supplied to the second electrode layer 4 through the second porous current collector 9a.

The second electrode layer 4 involves the reaction H₂ → 2H⁺ + 2e⁻. The first electrode layer 3 involves the reaction I/2O₂ + 2H⁺ + 2e⁻ → H₂O. With this configuration, hydrogen ions move from the second electrode layer 4 to the first electrode layer 3 through the electrolyte layer 2, and electrons flow from the second electrode layer 4 to the first electrode layer 3 through the second porous current collector 9a, the second plate-shaped current collector 9b, the first plate-shaped current collector 8b, and the first porous current collector 8a, and electric power is obtained accordingly. The fuel cell 101 is heated to a predetermined temperature with a heating device (not shown).

In Figure 1, the thickness of the first electrode layer 3 and the second electrode layer 4 is drawn in a size larger than the actual thickness for easy understanding. Although the first gas passage 10 and the second gas passage 11 are drawn as continuous large spaces, a groove or the like having a predetermined width is formed on each of the inner surfaces of the plate-shaped current collectors 8b and 9b.

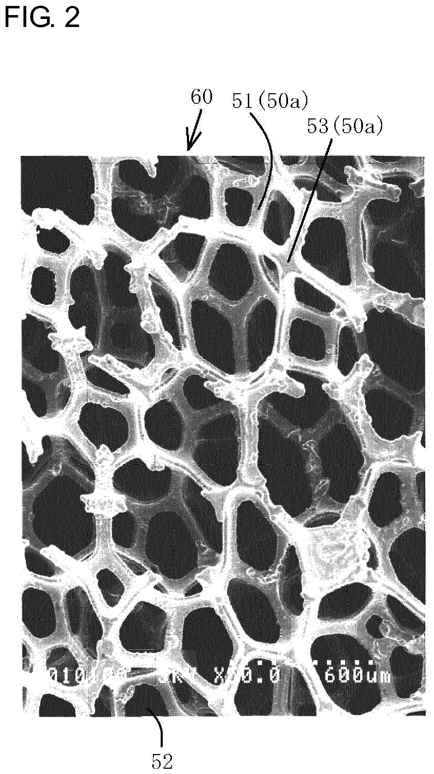

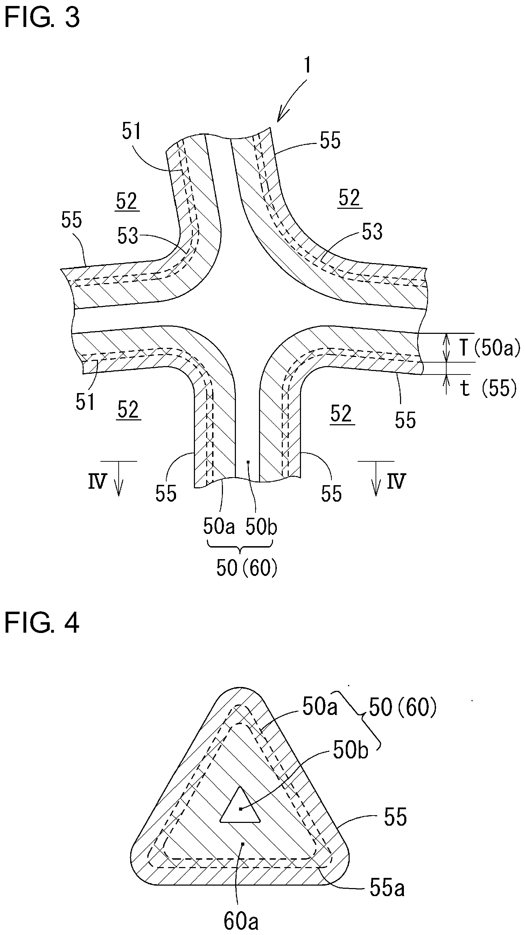

As illustrated in Figure 2, the first porous current collector 8a and the second porous current collector 9a according to this embodiment are formed of a porous base material 60 having a three-dimensional network structure. As illustrated in Figures 3 and 4, the porous base material 60 according to this embodiment is formed from a nickel-tin alloy and has a skeleton 50 having an outer shell 50a and a core 50b containing one or both of a hollow material and a conductive material. The skeleton 50 has an integrally continuous three-dimensional network structure.

The porous base material 60 formed from the nickel-tin alloy has the triangular prismatic skeleton 50 having a three-dimensionally continuous structure. The skeleton 50 has an integrally continuous structure in which multiple branch portions 51 meet at a node portion 53. Since the porous base material 60 is formed in a porous state with continuous pores 52, the gases can flow smoothly through the continuous pores 52 and can act on the electrode layers 3 and 4.

Since the porous current collectors 8a and 9a are stacked in contact with the electrodes, they are under a corrosive environment. In particular, the first porous current collector 8a is located in contact with the first electrode layer 3, which is an air electrode, and thus needs to be formed from a corrosion-resistant material. Therefore, a silver layer 55 is formed on the surface of the porous base material 60 formed from the nickel-tin alloy in this embodiment.

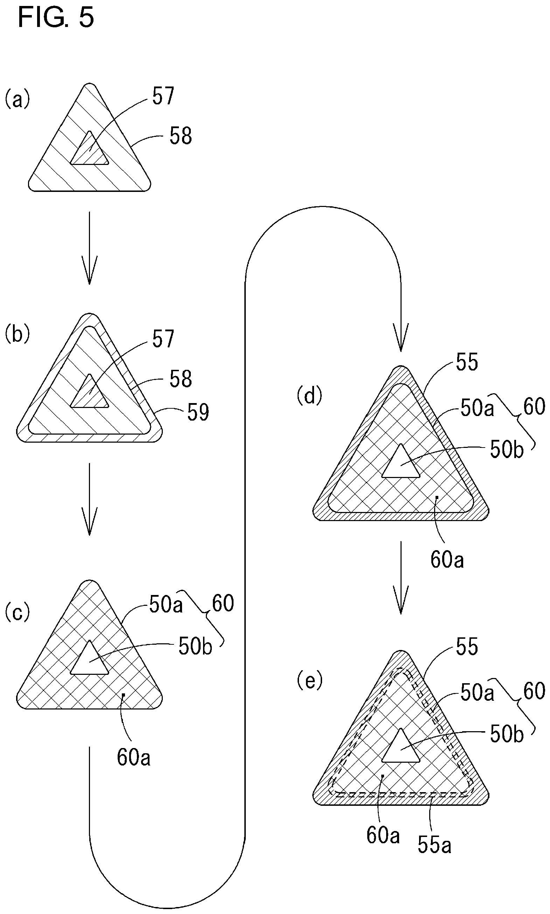

A method for producing the porous current collectors 8a and 9a will be described below with reference to Figure 5.

The porous base material 60 formed from the Ni-Sn alloy can be formed by using various methods. For example, the porous base material 60 of the Ni-Sn-alloy can be formed by a method including a step of subjecting a resin porous base material 57 having a three-dimensional network structure to an electrical conduction treatment to form a surface conductive layer (not shown), a Ni-coating-layer forming step of forming a Ni-coating layer 58 on the conductive layer, as illustrated in Figure 5(a), a Sn-coating-layer forming step of forming a Sn-coating layer 59 on the Ni-coating layer 58, a base-material removing step of removing the resin porous base material in an atmosphere containing at least oxygen, as illustrated in Figure 5(b), and a diffusing step of diffusing the Ni-coating layer 58 and the Sn-coating layer 59 to form an alloy through the action of heating at temperatures from 300°C to 1100°C in a reducing atmosphere, as illustrated in Figure 5(c). The method may sequentially include the following steps: the Ni-coating-layer forming step; the base-material removing step; a step of reducing the Ni-coating layer oxidized in the base-material removing step; the Sn-coating-layer forming step; and the diffusing step. In this embodiment, the entire porous base material is designated as a Ni-Sn-alloy layer 60a, but a Ni-Sn-alloy layer 60a having a predetermined thickness can also be formed only on the surface of the Ni-coating layer. The corrosion resistance of the porous base material itself can also be improved by forming an alloy further containing a component other than Sn, for example, chromium (Cr).

The resin having a three-dimensional network structure may be in the form of resin foam, non-woven fabric, felt, woven fabric, or the like. Although the resin having a three-dimensional network structure is not limited to any particular material, the resin is preferably formed of a material that can be removed by performing heating or the like after, for example, metal coating. A flexible material is preferably used in order to ensure processability and handleability. In particular, the resin having a three-dimensional network structure is preferably in the form of resin foam. The resin foam is in a porous state with continuous pores and a known resin foam can be used. For example, a urethane foam resin, a styrene foam resin, or the like can be used. The form, porosity, size, or the like of the pores of the foam resin are not limited, and can be appropriately set according to application.

Furthermore, in this embodiment, as illustrated in Figure 5(d), a silver layer 55 is formed on the surface of the porous base material 60 formed from the Ni-Sn alloy 60a. The silver layer 55 can be formed by impregnating the porous base material 60 with a silver paste and removing a solvent component. A silver paste containing isopropanol or the like to adjust the viscosity or the like is preferably used. In this embodiment, the silver layer 55 having a thickness t of about 5 µm is formed on the porous base material 60 in which the average thickness T of the skeleton is about 10 µm. A process for forming the silver layer 55 is not limited to the impregnation method, and the silver layer 55 can also be formed by a sputtering method or other methods.

As illustrated in Figure 5(e), a solid solution layer 55a in which a silver component and a Ni-Sn-alloy component form a solid solution is formed at and near the interface between the silver layer 55 and the porous base material 60 by heating the porous base material 60 having the silver layer 55 to the operating temperature of the fuel cell. Therefore, the strong silver layer 55 can be formed on the surface of the porous base material 60 formed from the Ni-Sn alloy.

The porous current collectors 8a and 9a formed from the porous base material 60 having the silver layer 55 have high corrosion resistance and can be stacked on the first electrode layer. The presence of the silver layer 55 reduces electric resistivity and results in reduced electrical resistance between the electrode layers 3 and 4 and the plate-shaped current collectors 8b and 9b. This can also increase power-generation efficiency.

Since the porosity can be set to a large value by forming the porous current collectors 8a and 9a from the porous base material 60, the flow rate of the gases acting on the electrode layers 3 and 4 can be increased. In addition, the size of the pores can be set to a uniform value, so that the gases can uniformly act on the electrode layers. This can increase power-generation efficiency.

The porosity of the porous current collectors 8a and 9a can be set to 30% to 98%. The porosity is preferably set to 40% to 96% and more preferably set to 50% to 92%. A low porosity results in low gas diffusion, which prevents the gases from uniformly acting on the electrode layers. In contrast, an excessively large porosity results in low strength of the metal porous layer.

In the porous base material 60, the metal plating weight can be set to 300 to 1000 g/m². The metal plating weight is preferably set to 350 to 800 g/m², and more preferably set to 400 to 750 g/m². A low metal plating weight results in low strength and low electrical conductivity, and thus leads to increased electrical resistance between the electrode layer and the current collector and to reduced current-collection efficiency. In contract, an excessively large metal plating weight results in small porosity and large gas flow resistance, which prevents the gases from sufficiently acting on the electrode layers.

The thickness of the porous base material 60 can be set according to the form of the fuel cell or the like. In order to ensure the diffusibility of the gas into the first electrode layer 3, the thickness can be set to 100 to 2000 µm. The thickness of the porous base material 60 is more preferably set to 120 to 1500 µm, and still more preferably set to 300 to 1500 µm. When the thickness of the porous current collectors 8a and 9a is too small, the gas diffusibility decreases and the gases fail to uniformly act on the electrode layers 3 and 4. When the thickness of the porous current collectors 8a and 9a is too large, the cell is large and the volume energy density of the fuel cell is low.

In this embodiment, the porous current collectors 8a and 9a formed from the porous base material 60 having a thickness of 1.4 mm are partially deformed by pressing the porous current collectors 8a and 9a between the electrode layers 3 and 4 and the inner surfaces of the plate-shaped current collectors 8b and 9b. The porous current collectors 8a and 9a are accordingly brought into close contact with the surfaces of these members and electrically coupled to these members. Therefore, the contact resistance between the electrode layers 3 and 4 and the plate-shaped current collectors 8b and 9b can also be significantly reduced.

Since the corrosive environment near the second electrode layer 4 is less severe than the corrosive environment near the first electrode layer, a porous base material formed only of nickel or the porous base material 60 formed from Ni-Sn and having no silver layer 55 can be used as the second porous current collector 9a, which is to be stacked on the second electrode layer 4, as it is.

It is also possible to "alloy the coating tin with the nickel porous base material" in the silver-layer dissolving step depending on the temperature at which at least part of the silver layer is dissolved in the nickel porous base material alloyed with tin. In this case, a tin-alloying step can be omitted.

### [Overview of Performance Test]

The comparative test about power generation performance was performed for a fuel cell in which a Ni-Sn porous current collector with a silver layer was used as a first porous current collector (air electrode), and a fuel cell in which a Ni-Sn porous current collector with no silver layer was used as a first porous current collector (air electrode). An attempt to form a silver layer on Ni was made, but the silver layer was easily peeled off, which made it difficult to use as a comparison target.

### [Production of Porous Base Material]

A metal porous base material having the three-dimensional network structure illustrated in Figure 2 to Figure 4 was used as a porous base material. A Ni-Sn-alloy porous base material having a thickness of 1.4 µm, a porosity of 95%, and a pore size of 0.45 µm and a nickel porous base material having the same structure as that in the porous current collector were formed by the process described in the overview of the embodiments.

### [Formation of Silver Layer on Porous Base Material]

The Ni-Sn-alloy porous base material was coated with a silver paste by an impregnation method. The thickness (t) of the coating layer was set to 5 µm. As the silver paste, a mixture of a Ag paste (DD-1240) available from Kyoto Elex Co., Ltd. and isopropanol was used. An attempt to coat a Ni porous base material with the silver paste was made, but the coating layer was peeled off from the surface of the Ni porous base material.

### [Structure of Fuel Cell]

A fuel cell A and a fuel cell B having the structure illustrated in Figure 1 and the following components were produced.

### Fuel Cell A

Material of solid electrolyte layer: yttrium-doped barium cerate (BCY)
Material of first electrode layer (air electrode): Lanthanum iron-based material

### (LSCF)

Material of second electrode layer (fuel electrode): Ni-BCY
Structure of first porous current collector: Ni-Sn-alloy porous base material + silver layer
Material of second porous current collector: Ni porous base material

### Fuel Cell B

Material of solid electrolyte layer: yttrium-doped barium cerate (BCY)
Material of first electrode layer (air electrode): Lanthanum iron-based material

### (LSCF)

Material of second electrode layer (fuel electrode): Ni-BCY
Material of first porous current collector: Ni-Sn-alloy porous base material
Material of second porous current collector: Ni porous base material

### [Test Conditions]

A porous current collector was reduced by heating a fuel cell at 800°C and causing H₂ to flow. Thereafter, while the fuel cell was heated at 800°C, H₂ was supplied to a second electrode layer (fuel electrode) at 0.5 L/min, and air was supplied to a first electrode layer (air electrode) at 1 L/min, and the power generation performance was measured.

### [Test Results]

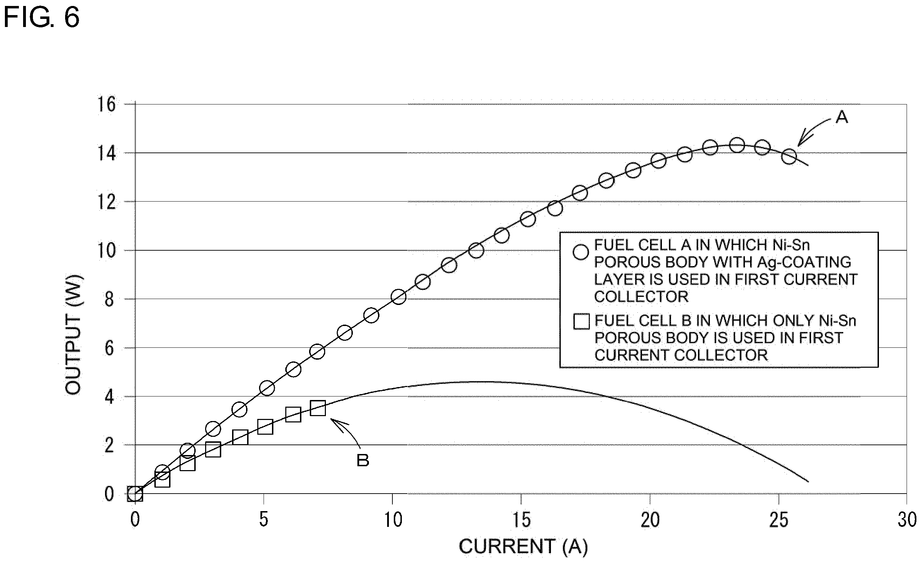

Figure 6 shows that the power generation performance (output) of the fuel cell A including the porous current collector with the silver layer was higher than that of the fuel cell B including the porous current collector with no silver layer. Therefore, the formation of the silver coating 55 improved the corrosion resistance and conductivity of the porous current collector 8a. The measurement of the power generation performance of the fuel cell B was suspended in the middle of measurement because the porous current collector was oxidized, which inhibited measurement of the power generation performance.

After completion of the test, the porous current collector with the silver layer 55 was taken out, and the cross-sectional structure was investigated. This investigation shows that part of the silver paste layer 55 was in the form of a solid solution on the surface of the Ni-Sn porous base material. Therefore, a silver layer having corrosion resistance and sufficient strength can be assumed to be formed in the operating environment of a fuel cell.

The scope of the present invention is not limited to the above embodiments. The embodiments disclosed herein are for illustrative purposes only in any respect and should not be construed as limiting. The scope of the present invention is indicated not by the above-described meaning but by the claims and is intended to include all modifications within the meaning and range of equivalency of the claims.

A fuel cell is illustrated as an example in the embodiments of the present invention, and the porous current collector of the present invention is also preferably used as a heat storage material, a dust collecting filter for use in a furnace, which is to contain a high-temperature atmosphere, an electrode for various electrochemical devices (e.g., an electrode for a plating device, or an electrode for a battery), a catalyst carrier, or the like. In these applications, "a porous metal body including a nickel porous base material, which is a porous base material having continuous pores and in which an alloy layer containing nickel and tin (Sn) is formed at least on a surface of the porous base material, and a silver layer formed on a surface of the nickel porous base material" can be used.

### Industrial Applicability

A current collector having high corrosion resistance and high conductivity can be provided at a low cost.

### Reference Signs List

- 2: Solid electrolyte layer
- 3: First electrode layer (air electrode)
- 4: Second electrode layer (fuel electrode)
- 5: Membrane electrode assembly
- 6: First current collector (on air electrode side)
- 7: Second current collector (on fuel electrode side)
- 8a: First porous current collector
- 8b: First plate-shaped current collector
- 9a: Second porous current collector
- 9b: Second plate-shaped current collector
- 10: First gas passage
- 11: Second gas passage
- 15: Gasket
- 16: Gasket
- 50: Skeleton
- 50a: Outer shell
- 50b: Core
- 51: Branch portion
- 52: Continuous pore
- 53: Node portion
- 55: Silver layer
- 55a: Solid solution layer
- 60: Porous base material
- 60a: Alloy layer
- 101: Fuel cell

## Claims

1. A porous current collector (8a, 9a), suitable for provision in at least one of a first current collector (6) and a second current collector (7) in a fuel cell including a solid electrolyte layer (2), a first electrode layer (3) on one side of the solid electrolyte layer (2), a second electrode layer (4) on the other side, the first current collector (6) on one side of the first electrode layer (3), and the second current collector (7) on the other side of the second electrode layer (4),
the porous current collector (8a, 9a) comprising:
a nickel porous base material (60), which is a porous base material (60) having continuous pores (52) and in which an alloy layer (60a) containing nickel and tin (Sn) is formed at least on a surface of the porous base material (60); and
a silver layer (55) formed on a surface of the alloy layer (60a) containing nickel and tin,
wherein:
a solid solution layer (55a) of nickel, tin, and silver is formed at and near an interface between the alloy layer (60a) and the silver layer (55) at least at an operating temperature of the fuel cell (101);
the nickel porous base material (60) has a three-dimensional network structure;
the three-dimensional network structure includes an integrally continuous skeleton (50) having an outer shell (50a) and a core (50b) containing one or both of a hollow material and a conductive material; and
the silver layer (55) is formed on a surface of the outer shell (50a) and the silver layer (55) covers an entire surface of the nickel porous base material (60).

2. The porous current collector according to Claim 1, wherein
the first electrode layer (3) is an air electrode,
the second electrode layer (4) is a fuel electrode, and
the porous current collector (8a, 9a) is provided in the first current collector (6).

3. The porous current collector according to Claim 1 or Claim 2, wherein a percentage of tin in the alloy layer (60a) is 5 to 20 mass%.

4. The porous current collector according to Claim 3, wherein the percentage of tin in the alloy layer (60a) is 5 to 16 mass%.

5. The porous current collector according to Claim 3, wherein the percentage of tin in the alloy layer (60a) is 5 to 10 mass%.

6. The porous current collector according to Claim 3, wherein the percentage of tin in the alloy layer (60a) is 8 to 16 mass%.

7. The porous current collector according to Claim 3, wherein the percentage of tin in the alloy layer (60a) is 8 to 10 mass%.

8. The porous current collector according to any one of Claims 1 to 7, wherein the silver layer (55) has a thickness of 1 µm to 50 µm, wherein the porous current collector (8a, 9a) has a porosity of 30% to 98% and a pore size of 0.2 to 5 mm.

9. The porous current collector according to Claims 1 to 8, wherein the silver layer (55) has a thickness of 1 µm or more and 30 µm or less.

10. The porous current collector according to Claims 1 to 9, wherein the silver layer (55) has a thickness of 1 µm or more and less than 10 µm.

11. The porous current collector according to any one of Claims 1 to 7, wherein the porous current collector (8a, 9a) has a porosity of 30% to 98% and a pore size of 0.2 to 5 mm.

12. A fuel cell comprising the porous current collector according to any one of Claims 1 to 11.

13. A method for producing a porous current collector (8a, 9a) of any of claims 1 to 11, comprising:
a nickel-porous-base-material forming step of forming a porous base material (60) containing nickel;
a tin-coating step of coating the nickel porous base material (60) with tin;
a silver-layer forming step of forming a silver layer (55) on the nickel porous base material (60) coated with tin in the tin-coating step; and
a silver-layer dissolving step of dissolving at least part of the silver layer (55) in the nickel porous base material (60).

14. The method for producing a porous current collector (8a, 9a) according to Claim 13, further comprising a tin-alloying step of alloying the coating tin with the nickel porous base material (60).

## Patentansprüche

1. Poröser Stromabnehmer (8a, 9a), der zur Bereitstellung in mindestens einem aus einem ersten Stromabnehmer (6) und einem zweiten Stromabnehmer (7) in einer Brennstoffzelle geeignet ist, welche eine Festelektrolytschicht (2), eine erste Elektrodenschicht (3) auf einer Seite der Festelektrolytschicht (2), eine zweite Elektrodenschicht (4) auf der anderen Seite, den ersten Stromabnehmer (6) auf einer Seite der ersten Elektrodenschicht (3) und den zweiten Stromabnehmer (7) auf der anderen Seite der zweiten Elektrodenschicht (4) umfasst,
der poröse Stromabnehmer (8a, 9a) umfassend:
ein poröses Basismaterial (60) aus Nickel, das ein poröses Basismaterial (60) mit durchgängigen Poren (52) ist und in dem mindestens auf einer Oberfläche des porösen Basismaterials (60) eine Legierungsschicht (60a), die Nickel und Zinn (Sn) enthält, gebildet ist; und
eine Silberschicht (55), die auf einer Oberfläche der Legierungsschicht (60a), welche Nickel und Zinn enthält, gebildet ist,
worin:
eine Mischkristallschicht (55a) aus Nickel, Zinn und Silber an und nahe einer Grenzfläche zwischen der Legierungsschicht (60a) und der Silberschicht (55) zumindest bei einer Betriebstemperatur der Brennstoffzelle (101) gebildet ist;
das poröse Basismaterial (60) aus Nickel eine dreidimensionale Netzwerkstruktur aufweist;
die dreidimensionale Netzwerkstruktur ein integral zusammenhängendes Gerüst (50) mit einer äußeren Schale (50a) und einem Kern (50b) umfasst, das eines oder beides aus einem Hohlmaterial und einem leitfähigen Material enthält; und
die Silberschicht (55) auf einer Oberfläche der äußeren Schale (50a) gebildet ist und die Silberschicht (55) eine gesamte Oberfläche des porösen Basismaterials (60) aus Nickel bedeckt.

2. Poröser Stromabnehmer gemäß Anspruch 1, worin
die erste Elektrodenschicht (3) eine Luftelektrode ist,
die zweite Elektrodenschicht (4) eine Brennstoffelektrode ist und
der poröse Stromabnehmer (8a, 9a) in dem ersten Stromabnehmer (6) bereitgestellt ist.

3. Poröser Stromabnehmer gemäß Anspruch 1 oder Anspruch 2, worin der Anteil an Zinn in der Legierungsschicht (60a) 5 bis 20 Massen-% beträgt.

4. Poröser Stromabnehmer gemäß Anspruch 3, worin der Anteil an Zinn in der Legierungsschicht (60a) 5 bis 16 Massen-% beträgt.

5. Poröser Stromabnehmer gemäß Anspruch 3, worin der Anteil an Zinn in der Legierungsschicht (60a) 5 bis 10 Massen-% beträgt.

6. Poröser Stromabnehmer gemäß Anspruch 3, worin der Anteil an Zinn in der Legierungsschicht (60a) 8 bis 16 Massen-% beträgt.

7. Poröser Stromabnehmer gemäß Anspruch 3, worin der Anteil an Zinn in der Legierungsschicht (60a) 8 bis 10 Massen-% beträgt.

8. Poröser Stromabnehmer gemäß mindestens einem der Ansprüche 1 bis 7, worin die Silberschicht (55) eine Dicke von 1 µm bis 50 µm aufweist, worin der poröse Stromabnehmer (8a, 9a) eine Porosität von 30% bis 98% und eine Porengröße von 0,2 bis 5 mm aufweist.

9. Poröser Stromabnehmer gemäß mindestens einem der Ansprüche 1 bis 8, worin die Silberschicht (55) eine Dicke von 1 µm oder mehr und 30 µm oder weniger aufweist.

10. Poröser Stromabnehmer gemäß mindestens einem der Ansprüche 1 bis 9, worin die Silberschicht (55) eine Dicke von 1 µm oder mehr und weniger als 10 µm aufweist.

11. Poröser Stromabnehmer gemäß mindestens einem der Ansprüche 1 bis 7, worin der poröse Stromabnehmer (8a, 9a) eine Porosität von 30% bis 98% und eine Porengröße von 0,2 bis 5 mm aufweist.

12. Brennstoffzelle, umfassend den porösen Stromabnehmer gemäß mindestens einem der Ansprüche 1 bis 11.

13. Verfahren zur Herstellung eines porösen Stromabnehmers (8a, 9a) gemäß mindestens einem der Ansprüche 1 bis 11, umfassend:
einen Schritt zur Bildung eines porösen Basismaterials aus Nickel, bei dem ein poröses Basismaterial (60) gebildet wird, das Nickel enthält;
einen Schritt zur Zinn-Beschichtung, bei dem das poröse Basismaterial (60) mit Zinn beschichtet wird;
einen Schritt zur Bildung einer Silberschicht, bei dem eine Silberschicht (55) auf dem porösen Basismaterial (60) aus Nickel, das im Zinn-Beschichtungs-Schritt mit Zinn beschichtet wurde, gebildet wird; und
einen Schritt zum Lösen der Silberschicht, bei dem mindestens ein Teil der Silberschicht (55) in dem porösen Basismaterial (60) aus Nickel gelöst wird.

14. Verfahren zur Herstellung eines porösen Stromabnehmers (8a, 9a) gemäß Anspruch 13, ferner umfassend einen Schritt des Zinn-Legierens, bei dem das beschichtende Zinn mit dem porösen Basismaterial (60) aus Nickel legiert wird.

## Revendications

1. Collecteur de courant poreux (8a, 9a), approprié pour la fourniture dans au moins un d'un premier collecteur de courant (6) et d'un second collecteur de courant (7) dans une pile à combustible incluant une couche d'électrolyte solide (2), une première couche d'électrode (3) sur un côté de la couche d'électrolyte solide (2), une seconde couche d'électrode (4) sur l'autre côté, le premier collecteur de courant (6) sur un côté de la première couche d'électrode (3), et le second collecteur de courant (7) sur l'autre côté de la seconde couche d'électrode (4),
le collecteur de courant poreux (8a, 9a) comprenant :
un matériau de base poreux de nickel (60), qui est un matériau de base poreux (60) présentant des pores continus (52) et dans lequel une couche d'alliage (60a) contenant du nickel et de l'étain (Sn) est formée sur au moins une surface du matériau de base poreux (60) ; et
une couche d'argent (55) formée sur une surface de la couche d'alliage (60a) contenant du nickel et de l'étain,
dans lequel :
une couche de solution solide (55a) de nickel, d'étain, et d'argent est formée sur et à proximité d'une interface entre la couche d'alliage (60a) et la couche d'argent (55) au moins à une température de fonctionnement de la pile à combustible (101) ;
le matériau de base poreux de nickel (60) présente une structure de réseau tridimensionnelle ;
la structure de réseau tridimensionnelle inclut un squelette intégralement continu (50) présentant une enveloppe externe (50a) et un noyau (50b) contenant un ou les deux d'un matériau creux et d'un matériau conducteur ; et
la couche d'argent (55) est formée sur une surface de l'enveloppe externe (50a) et la couche d'argent (55) recouvre une surface entière du matériau de base poreux de nickel (60).

2. Collecteur de courant poreux selon la revendication 1, dans lequel
la première couche d'électrode (3) est une électrode à air,
la seconde couche d'électrode (4) est une électrode à combustible, et
le collecteur de courant poreux (8a, 9a) est fourni dans le premier collecteur de courant (6).

3. Collecteur de courant poreux selon la revendication 1 ou la revendication 2, dans lequel un pourcentage d'étain dans la couche d'alliage (60a) est de 5 à 20 % en masse.

4. Collecteur de courant poreux selon la revendication 3, dans lequel le pourcentage d'étain dans la couche d'alliage (60a) est de 5 à 16 % en masse.

5. Collecteur de courant poreux selon la revendication 3, dans lequel le pourcentage d'étain dans la couche d'alliage (60a) est de 5 à 10 % en masse.

6. Collecteur de courant poreux selon la revendication 3, dans lequel le pourcentage d'étain dans la couche d'alliage (60a) est de 8 à 16 % en masse.

7. Collecteur de courant poreux selon la revendication 3, dans lequel le pourcentage d'étain dans la couche d'alliage (60a) est de 8 à 10 % en masse.

8. Collecteur de courant poreux selon l'une quelconque des revendications 1 à 7, dans lequel la couche d'argent (55) présente une épaisseur de 1 µm à 50 µm, dans lequel le collecteur de courant poreux (8a, 9a) présente une porosité de 30 % à 98 % et une taille de pore de 0,2 à 5 mm.

9. Collecteur de courant poreux selon les revendications 1 à 8, dans lequel la couche d'argent (55) présente une épaisseur de 1 µm ou supérieure et de 30 µm ou inférieure.

10. Collecteur de courant poreux selon les revendications 1 à 9, dans lequel la couche d'argent (55) présente une épaisseur de 1 µm ou supérieure et inférieure à 10 µm.

11. Collecteur de courant poreux selon l'une quelconque des revendications 1 à 7, dans lequel le collecteur de courant poreux (8a, 9a) présente une porosité de 30 % à 98 % et une taille de pore de 0,2 à 5 mm.

12. Pile à combustible comprenant le collecteur de courant poreux selon l'une quelconque des revendications 1 à 11.

13. Procédé de production d'un collecteur de courant poreux (8a, 9a) selon l'une quelconque des revendications 1 à 11, comprenant :
une étape de formation de matériau de base poreux de nickel formant un matériau de base poreux (60) contenant du nickel ;
une étape de revêtement d'étain revêtant le matériau de base poreux de nickel (60) avec de l'étain ;
une étape de formation de couche d'argent formant une couche d'argent (55) sur le matériau de base poreux de nickel (60) revêtu avec de l'étain dans l'étape de revêtement d'étain ; et
une étape de dissolution de couche d'argent dissolvant au moins une partie de la couche d'argent (55) dans le matériau de base poreux de nickel (60).

14. Procédé de production d'un collecteur de courant poreux (8a, 9a) selon la revendication 13, comprenant de plus une étape de formation d'alliage d'étain alliant le revêtement d'étain avec le matériau de base poreux de nickel (60).
